Europäisches Patentamt

**European Patent Office**

**Office européen des brevets**

(19)

(11) Publication number: **0 022 352**
**B1**

(12) **EUROPEAN PATENT SPECIFICATION**

(45) Date of publication of patent specification: **21.03.84**

(51) Int. Cl.³: **F 25 D 21/14, F 16 L 55/24**
**//E03C1/30, D06F39/10**

(21) Application number: **80302251.6**

(22) Date of filing: **03.07.80**

(54) A waste trap and a refrigeration unit incorporating such a waste trap.

(30) Priority: **04.07.79 GB 7923293**

(43) Date of publication of application:
**14.01.81 Bulletin 81/2**

(45) Publication of the grant of the patent:
**21.03.84 Bulletin 84/12**

(84) Designated Contracting States:
**AT BE CH DE FR GB IT LI LU NL SE**

(56) References cited:
CH - A - 139 754
DE - C - 299 260
FR - A - 676 401
FR - A - 1 213 457
FR - A - 1 517 089
GB - A - 438 962
GB - A - 443 525
GB - A - 1 064 318
GB - A - 1 324 988
GB - A - 2 004 930
US - A - 1 444 371
US - A - 1 483 891
US - A - 1 530 723
US - A - 2 907 180

(73) Proprietor: **CRAIG-NICOL LIMITED**
**Rosyth Road Polmadie**
**Glasgow Scotland (GB)**

(72) Inventor: **McAlpine, James Edward**
**Kelvin Avenue**
**Hillington Glasgow G52 4LF, Scotland (GB)**

(74) Representative: **McCallum, William Potter et al,**
**19 Royal Exchange Square**
**Glasgow G1 3AE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## A waste trap and a refrigeration unit incorporating such a waste trap

This invention relates to a waste trap and to a refrigeration unit incorporating such a waste trap.

Refrigeration units are commonly provided with a condensation outlet through which water of condensation can flow from the unit. Such condensation liquid tends to entrain other solid material and carries it into a totally enclosed waste trap located below the unit where it can build up to such an extent that the normal outlet from the waste trap is blocked off. In order to provide an indicator that the waste trap is blocked, an overflow connection is sometimes provided from the trap. This overflow connection is located so that if a blockage occurs, the condensation water does not flow back up the condensation outlet but flows out of the overflow connection from where it discharges in some obvious location to indicate that the waste trap is blocked. The trap has then to be disconnected, the blockage removed, and the trap re-connected.

An object of the present invention is to provide a form of waste trap particularly suitable for use with refrigeration units in which such blockages can be readily detected and removed without disconnection of the trap and in which the escape of cold air from the refrigeration units is avoided.

US—A—1,530,723 discloses a refrigeration apparatus having a condensate outlet and a waste trap comprising a liquid inlet connected to said condensate outlet; a liquid outlet; and a normally closed flushing aperture for receiving, in its open position, a flushing fluid supply, so that accumulated material creating a blockage of flow between the inlet and outlet can be flushed through the outlet by said flushing fluid.

The fitting disclosed by this prior patent specification does not however have a liquid seal means so that cold air will continually escape from the refrigerator therethrough. Neither does this fitting disclose an overflow means so that blockage cannot be readily detected.

FR—A—676,401 discloses a waste trap comprising an elongate main chamber having a base portion and an upper portion, an aperture located at one end of said chamber in the region of said base portion, a liquid outlet from said chamber at a level above said base portion, at the other end of said chamber, a downwardly extending liquid inlet intermediate said aperture and liquid outlet, including wall means extending downwardly, between the liquid inlet and outlet, below the level of said outlet to provide, in use of the trap, a liquid seal between said liquid inlet and outlet.

The fitting disclosed by this prior patent specification does not disclose an overflow means. Although the fitting has an aperture at one end of the chamber in the region of the base portion it is normally connected in use to an overflow from a bath so that an effective flushing fluid supply could not be connected thereto. Indeed the design of this fitting is not concerned with the problem of detecting and dealing with blockages and is not related in any way to the refrigeration apparatus art.

US—A—1,444,371 also is concerned with a waste fitting for a bath and does not in any way relate to the refrigeration apparatus art. The fitting disclosed has a liquid seal means and two cleaning apertures on opposite sides of, and at the upstream end of, the liquid seal means in a position inhibiting effective rodding or flushing (which in fact is not suggested in any way). Moreover no overflow means is provided for indicating blockages which in any event would in practice be detected by other means.

FR—A—1,517,089 discloses a waste fitting for a refrigeration apparatus which is provided with a liquid seal means. The fitting does not however have any flushing or cleaning apertures or overflow conduit, nor does the specification suggest any reasons for the provision of such means.

According to the present invention there is provided a refrigeration apparatus having a condensate outlet and a waste trap comprising a liquid inlet connected to said condensate outlet; a liquid outlet; and a normally closed flushing aperture for receiving, in its open position, a flushing fluid supply, so that accumulated material creating a blockage of flow between the inlet and outlet can be flushed through the outlet by said flushing fluid characterized in that there is provided means for creating a liquid seal within the trap between said liquid inlet and outlet, said flushing aperture being disposed on the upstream side of said liquid seal means; and an overflow communicating with said inlet at a higher level then the discharge level of said outlet for discharge of liquid from the trap at a readily visually observable location on blockage of flow between the inlet and outlet.

In a further aspect the present invention provides a waste trap comprising an elongate main chamber having a base portion and an upper portion, an aperture located at one end of said chamber in the region of said base portion, a liquid outlet from said chamber at a level above said base portion, at the other end of said chamber, a downwardly extending liquid inlet intermediate said aperture and liquid outlet, including wall means extending downwardly, between the liquid inlet and outlet, below the level of said outlet to provide, in use of the trap, a liquid seal between said liquid inlet and outlet characterized in that said aperture located at one end of said chamber is formed and arranged for receiving, in use thereof, a flushing fluid supply so that accumulated material creating a blockage of flow between the inlet and outlet can be flushed through the outlet by said flushing fluid, and there is provided an overflow conduit extending from the upper portion of the chamber on the inlet side of said liquid seal forming wall means at a higher level than the liquid outlet for discharge of liquid from the chamber at a readily visually observable location on blockage of flow between the inlet and outlet.

Preferably, the trap is provided with a normally-closed aperture whereby a rod or the like can be inserted into the trap to break down a blockage mechanically.

An embodiment of the invention will now be described, by way of example, with reference to the accompanying drawings in which:—

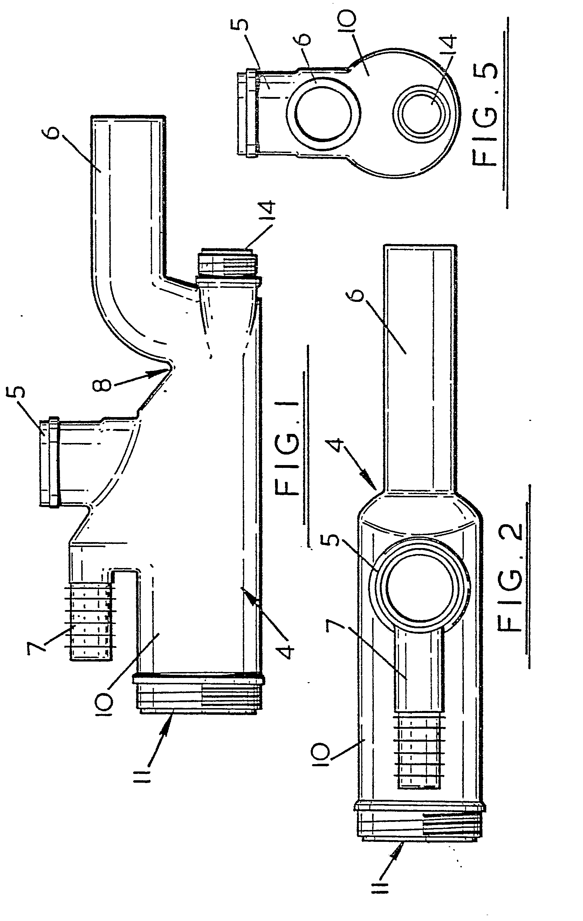

Fig. 1 is a side view;

Fig. 2 is a top plan view;

Fig. 3 is a underneath plan view; Fig. 4 is a longitudinal sectional view;

Fig. 5 is an end view looking from the right hand side of Fig. 1; and

Fig. 6 is an end view looking from the left hand side of Fig. 1.

Referring to the drawings, a unitary waste trap for use with a freezer unit comprises a body indicated generally by the reference numeral 4 having integrally formed therewith a condensation inlet 5, an outlet 6 and an overflow 7.

The wall of the body 4 is formed at 8 to define a partition which forms a water seal when in use between the outlet 6 and the inlet 5. Also the wall adjacent the junction between the inlet 5 and overflow 7 is formed at 9 so as to be vertically spaced from the lowest point of the internal diameter of the wall of the overflow 7. In this way, any water collecting in the body 4 will discharge through the overflow 7 rather than flow back up the condensation inlet 5 and before any blockage of the overflow can take place.

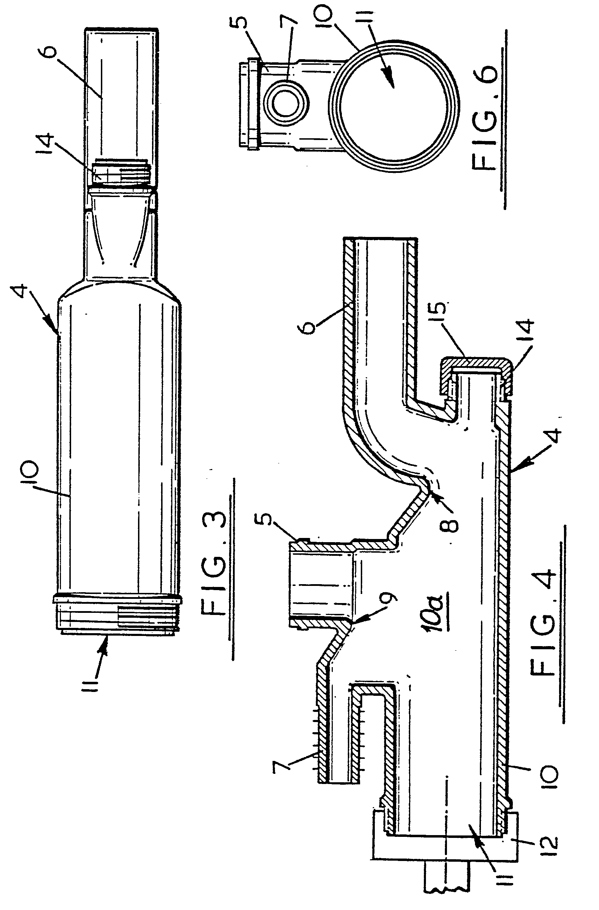

Below the overflow 7, the body 4 has a lateral extension 10 having a substantial diameter relative to the total internal vertical dimension of the trap and defining therein an elongated main chamber 10a. The lateral extension 10 has at one end thereof an opening 11 communicating with the main chamber 10a and to which a flushing unit 12 (Fig. 4) can be fitted by any suitable means e.g. screw-threading or snap-on connection. Thus if the main chamber 10a of the trap becomes blocked through solid waste material having accumulated therein, a cap (not shown) can be removed from the opening 11 and the flushing unit 12 fitted. Water can then be supplied under suitable pressure from the flushing unit 12 to clear the blockage by breaking down the accumulation of solid material and flushing it out of the outlet 6. A cleaning eye 14 closeable by an internally screw-threaded cap 15 is provided below the outlet 6. The cleaning eye 14 allows rodding of accumulated solid material in the chamber 10a of the trap if the flushing action alone is insufficient to clear the blockage.

The overflow 7 and liquid outlet 6 extend parallel to the axis of the elongated main chamber 10a of the trap. In this way the height of the trap is reduced in order to allow its accommodation within the relatively small space which customarily exists below refrigeration units with which it can be used.

In operation of the waste trap, the condensation inlet is connected below a freezer unit so that condensation liquid and any entrained solid material are normally carried through the trap and discharged from the outlet, the wall partition 9 forming a water seal to prevent any leakage of odours or cold air which would be detrimental to refrigeration.

If solid material builds up within the main chamber 10a of the trap to an extent sufficient to block the outlet 6, the condensation liquid builds up within the interior of the trap and eventually flows out through the overflow 7 to indicate blockage.

The flushing unit 12 can be of any suitable form. For example, it can take the form of a hose having an internally screwed cap at one end, the cap screw-threadedly engaging an external screw-thread adjacent to opening 11.

It will be appreciated that the form of waste trap shown in the drawings has a height which is relatively small relative to its length and can therefore be accommodated below units where the available height is limited.

It is considered that it is desirable for the flushing point in the waste trap to be located at the lowest level of the trap but it could be located elsewhere.

**Claims**

1. A refrigeration apparatus having a condensate outlet and a waste trap (4) comprising a liquid inlet (5) connected to said condensate outlet; a liquid outlet (6); and a normally closed flushing aperture (11) for receiving, in its open position, a flushing fluid supply, so that accumulated material creating a blockage of flow between the inlet (5) and outlet (6) can be flushed through the outlet (6) by said flushing fluid characterized in that there is provided means (8) for creating a liquid seal within the trap (4) between said liquid inlet (5) and outlet (6), said flushing aperture (11) being disposed on the upstream side of said liquid seal means (8); and an overflow (7) communicating with said inlet (5) at a higher level than the discharge level of said outlet (6) for discharge of liquid from the trap (4) at a readily visually observable location on blockage of flow between the inlet (5) and outlet (6).

2. Apparatus according to claim 1 wherein the axis of said flushing aperture (11) is generally horizontal and extends from the base of the liquid seal means (8) in a direction substantially opposite to that in which the liquid outlet (6) extends.

3. Apparatus according to claim 1 or claim 2, in which the trap is provided with a normally closed (15) rodding aperture (14), in the region of the base of said liquid seal means (8) through which rodding aperture a rod can be inserted into the trap to break down mechanically a said blockage within the trap.

4. Apparatus according to claim 3 wherein said rodding aperture (14) is disposed on the downstream side of said liquid seal means (8).

5. Apparatus according to claim 4 wherein the rodding aperture (14) is disposed below the liquid outlet (5) and generally opposite said flushing aperture (11).

6. Apparatus according to any one of claims 1 to 5, wherein the trap (4) comprises an elongate main chamber (10), the flushing aperture (11) being located adjacent one end of said chamber (10); the liquid outlet (6) being located adjacent the other end of the chamber (10); the liquid inlet (5) extending downwardly to communicate with the main chamber (10) at a location intermediate the flushing aperture (11) and liquid outlet (6), the liquid seal means comprising wall means extending downwardly from the upper wall of the chamber to below the level of said outlet (6) so as to define the liquid seal between the liquid inlet (5) and outlet (6); and the overflow conduit (7) extending from the chamber at an upper portion thereof.

7. A waste trap comprising an elongate main chamber (10) having a base portion and an upper portion, an aperture (11) located at one end of said chamber (10) in the region of said base portion, a liquid outlet (6) from said chamber (10) at a level above said base portion, at the other end of said chamber (10), a downwardly extending liquid inlet (5) intermediate said aperture (11) and liquid outlet (6), including wall means (8) extending downwardly, between the liquid inlet (5) and outlet (6), below the level of said outlet (6) to provide, in use of the trap, a liquid seal between said liquid inlet (5) and outlet (6) characterized in that said aperture (11) located at one end of said chamber (10) is formed and arranged for receiving, in use thereof, a flushing fluid supply so that accumulated material creating a blockage of flow between the inlet (5) and outlet (6) can be flushed through the outlet (6) by said flushing fluid, and there is provided an overflow conduit (7) extending from the upper portion of the chamber on the inlet side of said liquid seal forming wall means (8) at a higher level than the liquid outlet (6) for discharge of liquid from the chamber at a readily visually obervable location on blockage of flow between the inlet (5) and outlet (6).

8. A waste trap according to claim 7, in which a normally closed rodding aperture (11) is provided at said other end of the main chamber below said liquid outlet (6) so that a rod can be inserted into the main chamber to break down mechanically a said blockage in said chamber.

9. A waste trap according to claim 7 or claim 8 in which the liquid seal forming wall means (8) is constituted by an external wall portion of the trap (4).

10. A waste trap according to any one of claims 7 to 9, in which the overflow and liquid outlet extend substantially parallel to the axis of the main chamber.

**Revendications**

1. Appareil frigorifique comprenant une sortie de condensat en un dispositif pour capter des déchets (4) comprenant une entrée (5) de liquide reliée à ladite sortie de condensat; une sortie (6) de liquide; et une ouverture de chasse (11) normalement fermée destinée à recevoir, dans sa position ouverte, une alimentation en fluide de chasse, de manière à ce que les matières accumulées créant un blocage de l'écoulement entre l'entrée et la sortie puissent être chassées par la sortie par ledit fluide de chasse, caractérisé en ce que sont prévus des moyens (8) pour créer une isolation par liquide à l'intérieur du dispositif entre lesdites entrée (5) et sortie (6) de liquide, ladite ouverture de chasse (11) étant disposée du côté amont desdits moyens (8) d'isolation par liquide; et un tropplein (7) communiquant avec ladite entrée (5) à un niveau plus élevé que le niveau d'évacuation de ladite sortie (6), destiné à l'évacuation du liquide à partir du dispositif (4) en un emplacement facilement observable visuellement lors du blocage de l'écoulement entre l'entrée (5) et la sortie (6).

2. Appareil selon la revendication 1, dans lequel l'axe de ladite ouverture de chasse (11) est sensiblement horizontal et s'étend à partir de la base des moyens d'isolation par liquide (8) dans une direction sensiblement opposée à celle dans laquelle s'étend la sortie (6) de liquide.

3. Appareil selon l'une quelconque des revendications 1 et 2, dans lequel le dispositif est pourvu d'une ouverture de pilonnage (14) normalement fermée (15), dans la région de la base desdits moyens d'isolation par liquide (8), à travers laquelle ouverture de pilonnage une tige peut être insérée dans le dispositif pour rompre de façon mécanique un tel blocage à l'intérieur du dispositif.

4. Appareil selon la revendication 3, dans lequel ladite ouverture de pilonnage (14) est disposée du côté aval desdits moyens d'isolation par liquide (8).

5. Appareil selon la revendication 4, dans lequel l'ouverture de pilonnage (14) est disposée au-dessous de la sortie (6) et sensiblement à l'opposé de ladite ouverture de chasse (11).

6. Appareil selon l'une quelconque des revendications 1 à 5, dans lequel le dispositif (4) comprend une chambre principale allongée (10a), l'ouverture de chasse (11) étant adjacente à une extrémité de ladite chambre (10a); la sortie (6) de liquide étant adjacente à l'autre extrémité de la chambre (10a); l'entrée (5) de liquide s'étendant vers le bas pour communiquer avec la chambre principale (10a) en un emplacement situé entre l'ouverture de chasse (11) et la sortie (6) de liquide, les moyens d'isolation par liquide comprenant des moyens à parois s'étendant vers le bas à partir de la paroi supérieure de la chambre, jusqu'en dessous du niveau de ladite sortie (6), de manière à définir l'isolation par liquide entre l'entrée (5) et la sortie (6) de liquide; et le conduit de trop-plein (7) s'étendant à partir de la chambre dans une partie supérieure de celle-ci.

7. Dispositif pour capter des déchets comprenant une chambre principale allongée (10a) comportant une partie de base et une partie supérieure, une ouverture (11) située à une extrémité de ladite chambre (10a) dans la région de ladite partie de base, une sortie de liquide de ladite chambre (10a) à un niveau situé au-dessus de ladite partie de base, à l'autre extrémité de ladite chambre (10a), une entrée (5) de liquide s'étendant vers le bas entre ladite ouverture (11) et la sortie (6) de liquide, incluant des moyens à paroi (8) s'étendant vers le bas, entre l'entrée (5) et la sortie (6) de liquide au dessous du niveau de ladite sortie (6), pour procurer, lors de l'opération du dispositif, une isolation par liquide entre lesdites entrée (5) et sortie (6) de liquide, caractérisé en ce que ladite ouverture (11) située à une extrémité de ladite chambre (10a) est conformée et agencée pour recevoir, lors de son opération, une alimentation en fluide de chasse, de manière à ce que les matières accumulées créant un blocage de l'écoulement entre l'entrée (5) et la sortie (6) puissent être chassées à travers la sortie par ledit fluide de chasse, et en ce qu'est prévu un conduit de trop-plein (7) s'étendant à partir de la partie supérieure de la chambre, du côté de l'entrée desdits moyens (8) à paroi formant l'isolation par liquide, à un niveau plus élevé que la sortie (6) de liquide, afin d'évacuer le liquide de la chambre en un emplacement facilement observable visuellement lors du blocage de l'écoulement entre l'entrée (5) et la sortie (6).

8. Dispositif pour capter des déchets selon la revendication 7, dant lequel une ouverture de pilonnage (11) normalement fermée est prévue à ladite autre extrémité de la chambre principale au-dessous de ladite sortie (6) de liquide, de manière à ce qu'une tige puisse être insérée dans la chambre principale pour rompre mécaniquement un tel blocage dans ladite chambre.

9. Dispositif pour capter des déchets selon l'une quelconque des revendications 7 et 8, dans lequel les moyens à paroi formant l'isolation par liquide (8) sont constitués d'une partie de paroi extérieure au dispositif (4).

10. Dispositif pour capter des déchets selon l'une quelconque des revendications 7 à 9, dans lequel le tropplein et la sortie de liquide s'étendent sensiblement parallèlement à l'axe de la chambre principale.

**Patentansprüche**

1. Kühleinrichtung mit einem Kondensatauslaß und einer Kondensatfalle (4), der einen Flüssigkeitseinlaß (5), der mit dem Kondensatauslaß verbunden ist, einen Flüssigkeitsauslaß (6) und eine normalerweise geschlossene Spülöffnung (11) aufweist, an die in ihrer offenen Stellung eine Fördereinrichtung für Spülflüssigkeit anschließbar ist, so daß angesammeltes Material, das eine Blockierung des Flusses zwischen dem Einlaß (5) und dem Auslaß (6) bildet, durch den Auslaß (6) mittels der Spülflüssigkeit herausspülbar ist, dadurch gekennzeichnet, daß eine Einrichtung (8) zur Bildung einer Flüssigkeitsdichtung innherhalb der Kondensatfalle (4) zwischen dem Flüssigkeitseinlaß (5) und dem Auslaß (6) vorgesehen ist, wobei die Spülöffnung (11) auf der stromaufwärts liegenden Seite der Einrichtung (8) zur Bildung einer Flüssigkeitsdichtung angeordnet ist, und daß ein Überlauf (7) vorgesehen ist, der mit dem Einlaß (5) auf einem höheren Niveau als das Abflußniveau des Flüssigkeitsauslasses (6) zum Abführen von Flüssigkeit aus der Kondensatfalle (4) an einer ohne weiteres einsehbaren Stelle bei Blockierung des Flusses zwischen dem Einlaß (5) und dem Auslaß (6) in Verbindung steht.

2. Kühleinrichtung nach Anspruch 1, dadurch gekennzeichnet, daß die Achse der Spülöffnung (11) im allgemeinen horizontal angeordnet ist und sich von der Basis der Einrichtung (8) zur Bildung einer Flüssigkeitsdichtung in einer Richtung erstreckt, die im wesentlichen entgegengesetzt ist zu der, in der sich der Flüssigkeitsauslaß (6) erstreckt.

3. Kühleinrichtung nach Anspruch 1 oder 2, dadurch gekennzeichnet, daß die Kondensatfalle mit einer im allgemeinen geschlossenen (15) Reinigungsöffnung (14) versehen ist, die sich in dem Basisbereich der Einrichtung (8) zur Bildung einer Flüssigkeitsdichtung befindet, wobei durch die Reinigungsöffnung eine Stange in die Kondensatfalle einführbar ist, um mechanisch die Blockierung innerhalb des Kondensatfalles aufzubrechen.

4. Kühleinrichtung nach Anspruch 3, dadurch gekennzeichnet, daß die Reinigungsöffnung (14) auf der stromabwärtigen Seite der Einrichtung (8) zur Bildung einer Flüssigkeitsdichtung angeordnet ist.

5. Kühleinrichtung nach Anspruch 4, dadurch gekennzeichnet, daß die Reinigungsöffnung (14) unterhalb des Flüssigkeitsauslasses (5) und im wesentlichen gegenüber der Spülöffnung (11) angeordnet ist.

6. Kühleinrichtung nach einem der Ansprüche 1 bis 5, dadurch gekennzeichnet, daß der Kondensatfalle (4) eine langgestreckte Hauptkammer (10) aufweist, daß die Spülöffnung (11) in der Nachbarschaft von einem Ende der Kammer (10) angeordnet ist, daß der Flüssigkeitsauslaß (6) in der Nachbarschaft des anderen Endes der Kammer (10) angeordnet ist, daß der Flüssigkeitseinlaß (5) sich nach unten erstreckt, um mit der Hauptkammer (10) an einer Stelle in Verbindung zu stehen, die zwischen der Spülöffnung (11) und dem Flüssigkeitsauslaß (6) angeordnet ist, daß die Einrichtung zur Bildung einer Flüssigkeitsdichtung Wandeinrichtungen aufweist, die sich von der oberen Wand der Kammer bis unterhalb des Niveaus des Auslasses (6) nach unten erstrecken, um die Flüssigkeitsdichtung zwischen dem Flüssigkeitseinlaß (5) und dem Flüssigkeitsauslaß (6) zu bilden, und daß das Überlaufrohr (7) sich von einem oberen Teil der Kammer aus erstreckt.

7. Kondensatfalle mit einer langgestreckten Hauptkammer (10), die einen Basisbereich und einen oberen Bereich aufweist, mit einer Öffnung (11), die an einem Ende der Kammer (10) im Bereich des Basisbereiches angeordnet ist, mit einem Flüssigkeitsauslaß (6) der Kammer (10), der in einer Höhe oberhalb des Basisbereiches am anderen Ende der Kammer (10) angeordnet ist, mit einem sich nach unten erstreckenden Flüssigkeitseinlaß (5), der zwischen der Öffnung (11) und dem Flüssigkeitsauslaß (6) angeordnet ist und mit einer Wandeinrichtung (8), die sich nach unten zwischen dem Flüssigkeitseinlaß (5) und dem Auslaß (6) unterhalb der Höhe des Auslasses (6) zur Schaffung einer bei der Benutzung der Kondensatfalle wirksamen Flüssigkeitsdichtung zwischen dem Flüssigkeitseinlaß (5) und dem Auslaß (6), dadurch gekennzeichnet, daß die Öffnung (11) an einem Ende der Kammer (10) angeordnet und im Betrieb zum Anschluß einer Spülflüssigkeitsleitung vorgesehen ist, so daß angesammeltes Material, das eine Blockierung des Flusses zwischen dem Einlaß (5) und dem Auslaß (6) bildet, durch den Auslaß (6) mittels der Spülflüssigkeit ausspülbar ist, und daß ein Überlaufrohr (7) vorgesehen ist, das sich von dem oberen Bereich der Kammer auf der Einlaßseite der eine Flüssigkeitsdichtung bildenden Wandeinrichtung (8) in einer größeren Höhe als der Flüssigkeitsauslaß (6) zum Abführen von Flüssigkeit aus der Kammer an einer ohne weiteres einsehbaren Stelle bei Blockierung des Flusses zwischen dem Einlaß (5) und dem Auslaß (6) erstreckt.

8. Kondensatfalle nach Anspruch 7, dadurch gekennzeichnet, daß eine normalerweise geschlossene Reinigungsöffnung (11) vorgesehen ist, die sich an dem anderen Ende der Hauptkammer unterhalb des Flüssigkeitsauslasses (6) befindet, so daß eine Stange in die Hauptkammer einführbar ist, um mechanisch die Blockierung in der Kammer aufzulösen.

9. Kondensatfalle nach Anspruch 7 oder 8, dadurch gekennzeichnet, daß die Wandeinrichtung (8), welche die Flüssigkeitsdichtung bildet, von einem äußeren Wandteil der Kondensatfalle (4) gebildet ist.

10. Kondensatfalle nach einem der Ansprüche 7 bis 9, dadurch gekennzeichnet, daß sich der Überlauf und der Flüssigkeitsauslaß im wesentlichen parallel zu der Achse der Hauptkammer erstreckten.

FIG. I

FIG. 2

FIG. 5

0 022 352

FIG. 3

FIG. 4

FIG. 6

0 022 352